# EUROPÄISCHE PATENTANMELDUNG

(11) **EP 0 948 992 A2**
(43) Veröffentlichungstag der Anmeldung: **13.10.1999**
(21) Anmeldenummer: 99890094.8
(22) Anmeldetag: 15.03.1999
(51) Int. Cl.: B01D 53/85

(54) **Geschlossenes Biofilter in Etagenbauweise**

(30) Priorität: 07.04.1998 AT 23498 U
(71) Anmelder: M-U-T MASCHINEN-UMWELTTECHNIK- TRANSPORTANLAGEN GESELLSCHAFT M.B.H., A-2000 Stockerau (AT)
(72) Erfinder: Harrer, Ewald, Dipl.-Ing., 2000 Stockerau (AT)
(74) Vertreter: Müllner, Erwin, Dr.

(57) **Zusammenfassung**

Ein geschlossenes Biofilter in Etagenbauweise umfaßt Filterkörbe (1, 2, 3, 4) in Form von Filtereinschüben in einem Rahmengestell (6). Durch eine geruchs- und strömungsdichte Verkleidung wird jeweils unterhalb eines jeden Filterkorbes (1, 2, 3, 4) ein Luftverteilraum (7) und jeweils oberhalb der Oberfläche des Filterkorbes (1, 2, 3, 4) ein Luftsammelraum (8) gebildet. Alle Luftverteilräume (7) stehen unmittelbar mit einem gemeinsamen Verteilschacht (9) und alle Luftsammelräume (8) mit einem Sammelschacht (11) in Verbindung. Damit sind die einzelnen Etagen bzw. deren Filterkörbe (1, 2, 3, 4) parallelgeschaltet. Die Konstruktion sieht den Verteilschacht (9) und den Sammelschacht (11) jeweils links und rechts von dem die Filterkörbe tragenden Rahmengestell (6) vor, dessen Verkleidung stirnseitig durch eine Tür (13) gebildet wird.

## Beschreibung

Die Erfindung betrifft ein geschlossenes Biofilter in Etagenbauweise mit einem Rahmengestell für Filtereinschübe und mit Luftführungsschächten im Inneren einer geruchs- und strömungsdichten kastenähnlichen Verkleidung, mit mindestens einer Tür für die Wartung und den Wechsel der Filtereinschübe und mit mindestens einem bodenseitigen Anschluss für Filterrohluft sowie mit mindestens einem deckenseitigen Auslass für Filterabluft.

Es ist bekannt, Filtergehäuse mit Gitterboden einfach übereinander zu stapeln und dadurch das Filtermaterial aufzuteilen. Diese Etagenfilter haben mehrere Vorteile gegenüber einem Filter mit einer durchgehenden Befüllung, denn die einzelnen Etagen können von einem Hubstapler einfach abgehoben und das Filtermaterial gewechselt werden; ferner ergibt sich je Etage eine neue Luftverteilung, sodass einer Kanalbildung entgegengewirkt wird und schließlich kann ein Zusammenpressen des Filtermaterials unter dem Eigengewicht vermieden werden.

Wenn man davon ausgeht, dass nur eine Befüllung von ca. 20 cm wirksam ist und dass bei Etagenbauweise die Serienschaltung je Etage zu völlig unterschiedlichen Konditionen für die wirksamen Bakterien führt, dann kommt man zum Ergebnis, dass ein Flächenfilter den besten Wirkungsgrad hat. Nachteilig dabei ist aber die Größe der benötigten Grundrissfläche sowie die Größe der Abdeckglocke für die Filterabluft. Die Erfindung zielt darauf ab, diese Nachteile zu vermeiden. Dies wird dadurch erreicht, dass die Filtereinschübe im Wesentlichen als Filterkörbe mit luftdurchlässigem, insbesondere gelochtem Boden ausgebildet sind, dass jeder Filterkorbboden eine direkte Verbindung, beispielsweise über einen gemeinsamen Verteilschacht, mit dem Eintrittsstutzen für Filterrohluft aufweist und dass jede Filterkorboberfläche über einen Sammelschacht mit dem Autrittsstutzen für Filterabluft in Verbindung steht. Es wird somit von der aktuellen Etagenbauweise ausgegangen, jedoch werden die Filtereinschübe nicht hintereinander durchströmt, sondern parallel geschaltet. Dadurch ergibt sich sinngemäß ein Flächenfilter, das in Etagenflächen zerlegt und parallel mit Filterrohluft durchströmt wird. Jede Etage ist ein komplettes Filter, dem kein weiteres Filter nachgeschaltet ist. Daher trifft die Filterrohluft in ihrem ursprünglichen Zustand auf jeden Filtereinschub, sodass sich in allen Etagen exakt die gleichen Bedingungen einstellen. Es lässt sich damit ein Biofilter dieser Bauart einheitlich temperieren und es genügt auch ein einheitlicher Feuchtigkeitsgehalt, um Sorption und biologischen Abbau optimal in Gang zu halten.

Es ist zweckmäßig, wenn das Rahmengestell Trennwände aufweist, die zusammen mit der kastenähnlichen Verkleidung den vertikalen Verteilschacht bilden, von dem horizontale Kanäle zu jedem Filterkorbboden ausgehen und wenn dem Verteilschacht gegenüberliegend und von diesem getrennt der ebenfalls von den Trennwänden und der kastenähnlichen Verkleidung gebildete vertikale Sammelschacht vorgesehen ist, in den Kanäle einmünden, die zu den Filterkorboberflächen führen. Das Biofilter umfasst somit einen Mittelbereich mit dem Rahmengestell und die durch Trennwände und die Außenverkleidung gebildeten, links und rechts des Rahmengestells anschließenden vertikalen Schächte, nämlich einerseits den Verteilschacht und anderseits den Sammelschacht. Das Rahmengestell weist zur Beschickung mit Filtereinschüben frontseitig einen türähnlichen Deckel auf, der dicht auf dem Filtergehäuse aufsitzt. Die Filtereinschübe können mit dem Hubstapler herausgezogen, geleert, frisch befüllt und wieder eingesetzt werden.

Eine Weiterbildung der Erfindung ist dadurch gekennzeichnet, dass die Trennwände jede Etage zu der nächsten Etage abschotten, dass je Etage jeweils Boden und Oberfläche des Filterkorbes im Abstand zu je einer Etagentrennwand liegen und dass die jeweils bodenseitigen Abstandsräume als Luftverteilräume für Filterrohluft und die jeweils oberflächenseitigen Abstandsräume als Luftsammelräume für die Filterabluft ausgebildet und die Luftverteilräume sowie die Luftsammelräume jeweils insbesondere über einen Verteilschacht bzw. über einen Sammelschacht parallel geschaltet sind und die parallelgeschaltete Luftverteilräume in direkter Verbindung mit dem Eintrittsstutzen für Filterrohluft bzw. die parallelgeschalteten Luftsammelräume in direkter Verbindung mit dem Austrittsstutzen für gereinigte Filterabluft liegen. Wesentlich ist der einfache Aufbau, der geringe Platzbedarf und die problemlose Prozeßführung mit je Filtereinschub völlig gleichen Konditionen hinsichtlich Temperatur und Subtratfeuchte.

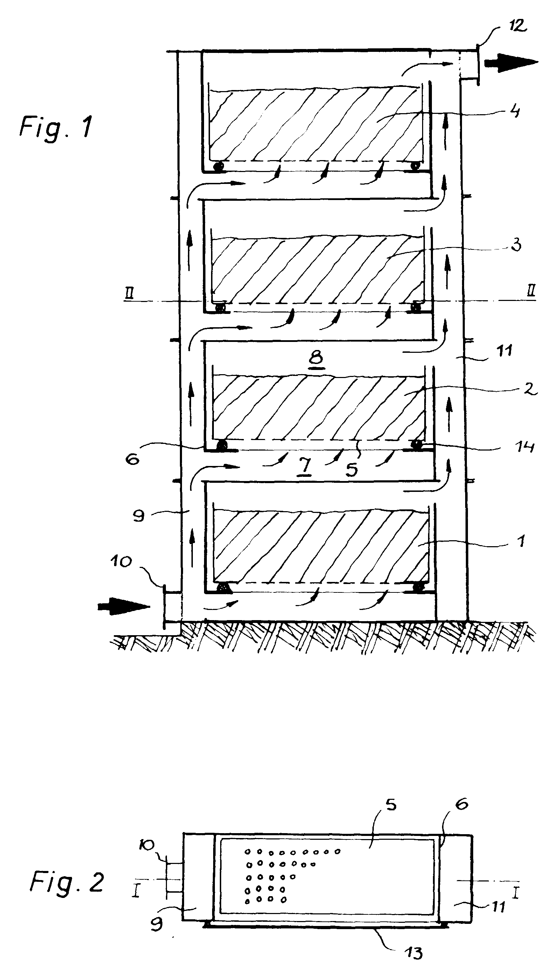

Ein Ausführungsbeispiel ist in den Zeichnungen dargestellt. Fig. 1 zeigt einen Schnitt durch ein Biofilter gemäß der Erfindung nach der Linie I-I in Fig. 2 und Fig. 2 einen Schnitt nach der Linie II-II in Fig. 1.

Ein Biofilter gemäß Fig. 1 und 2 umfasst im Ausführungsbeispiel vier Filterkörbe 1, 2, 3, 4 jeweils mit einem gelochten Boden 5. Die Filterkörbe 1 bis 4 sind mit Filtermaterial in einer Höhe von z.B. jeweils 50 cm gefüllt. Sie befinden sich als ladenartige Einschübe in einem Rahmengestell 6, das die einzelnen Filterkörbe 1 bis 4 in vertikaler Richtung im Abstand zueinander hält. Es ergeben sich durch die Abstände unterhalb eines jeden gelochten Bodens 5 eines Filterkorbes 1 bis 4 und oberhalb eines jeden Filterkorbes 1 bis 4 jeweils Lufträume, die zwischen den Filterkörben 1 bis 4 durch Trennwände geruchs- und luftdicht voneinander abgeschottet sind. Diese Lufträume bilden unterhalb eines jeden gelochten Bodens 5 eines Filterkorbes einen Luftverteilraum 7 und oberhalb eines Filterkorbes, über der Oberfläche der Befüllung mit Biomasse, einen Luftsammelraum 8. Ein gemeinsamer Verteilschacht 9 verbindet alle Luftverteilräume 7, sodass die zu filternde Luft vom Eintrittsstutzen 10 über den Verteilschacht 9 und die Luftverteilräume 7 jedem gelochten Filterboden 5 der Filterkörbe 1 bis 4 gleichermaßen zugeführt wird. Ebenso sind alle Luftsammelräume 8 oberhalb eines jeden Filterkorbes 1 bis 4 zu einem gemeinsamen Sammelschacht 11 hin offen. Der Sammelschacht 11 endet mit einem Ausstrittsstutzen 12. Gefilterte umweltverträgliche Luft verlässt das Biofilter über den Ausstrittsstutzen 12.

Das die Filterkörbe 1 bis 4 tragende Rahmengestell 6 ist kastenähnlich verkleidet. Verteilschacht 9 und Sammelschacht 11 schließen links und rechts seitlich an das verkleidete Rahmengestell 6 an. Eine Tür 13 (Fig. 2) wird durch die stirnseitige Verkleidung des Rahmengestelles 6 gebildet.

Die einzelnen Filterkörbe 1 bis 4 liegen nach unten hin an Dichtungen 14 auf, die ein seitliches Vorbeistreichen der Luft aus den Luftverteilräumen 7 unter Umgehung des Filtermaterials in den Filterkörben 1 bis 4 verhindern. Die einzelnen in Etagen übereinander angeordneten Filterkörbe 1 bis 4 sind durch den gemeinsamen Verteilschacht 9 und den gemeinsamen Sammelschacht 11 parallel geschaltet. Somit durchsetzt die beim Stutzen 10 eintretende Filterrohluft auf ihrem Weg zum Austrittstutzen 12 immer nur eine Etage, also einen Filterkorb 1 oder 2 oder 3 oder 4. In allen Filtermassen bzw. allen Filterkörben 1 bis 4 herrschen die gleichen mikrobiologischen Bedingungen. Sie können durch ein gemeinsames Temperieren und eine gemeinsame, jeweils gleiche Feuchtigkeit so eingestellt werden, dass sich ein optimaler Wirkungsgrad ergibt.

## Patentansprüche

1. Geschlossenes Biofilter in Etagenbauweise mit einem Rahmengestell für Filtereinschübe und mit Luftführungsschächten im Inneren einer geruchs- und strömungsdichten kastenähnlichen Verkleidung, mit mindestens einer Tür für die Wartung und den Wechsel der Filtereinschübe und mit mindestens einem bodenseitigen Anschluss für Filterrohluft sowie mit mindestens einem deckenseitigen Auslass für Filterabluft, **dadurch gekennzeichnet,** dass die Filtereinschübe im Wesentlichen als Filterkörbe (1, 2, 3, 4) mit luftdurchlässigem, insbesondere gelochtem Boden (5) ausgebildet sind, dass jeder Filterkorbboden (5) eine direkte Verbindung, beispielsweise über einen gemeinsamen Verteilschacht (9), mit dem Eintrittsstutzen für Filterrohluft aufweist und dass jede Filterkorboberfläche über einen Sammelschacht (11) mit dem Austrittsstutzen (12) für Filterabluft in Verbindung steht.

2. Biofilter nach Anspruch 1, **dadurch gekennzeichnet,** dass das Rahmengestell (6) Trennwände aufweist, die zusammen mit der kastenähnlichen Verkleidung den vertikalen Verteilschacht (9) bilden, von dem horizontale Kanäle zu jedem Filterkorbboden (5) ausgehen und dass dem Verteilschacht (9) gegenüberliegend und von diesem getrennt der ebenfalls von den Trennwänden und der kastenähnlichen Verkleidung gebildete vertikale Sammelschacht (11) vorgesehen ist, in den Kanäle einmünden, die zu den Filterkorboberflächen führen.

3. Biofilter nach Anspruch 2, **dadurch gekennzeichnet,** dass die Trennwände jede Etage zu der nächsten Etage abschotten, dass je Etage jeweils Boden und Oberfläche des Filterkorbes (1, 2, 3, 4) im Abstand zu je einer Etagentrenn wand liegen und dass die jeweils bodenseitigen Abstandsräume als Luftverteilräume (7) für Filterrohluft und die jeweils oberflächenseitigen Abstandsräume als Luftsammelräume (8) für die Filterabluft ausgebildet und die Luftverteilräume (7) sowie die Luftsammelräume (8) jeweils insbesondere über einen Verteilschacht (9) bzw. einen Sammelschacht (11) parallel geschaltet sind und die parallelgeschaltete Luftverteilräume (7) in direkter Verbindung mit dem Eintrittsstutzen (10) Filterrohluft bzw. die parallel geschalteten Luftsammelräume (8) in direkter Verbindung mit dem Austrittsstutzen (12) für gereinigte Filterabluft liegen.
